(19) **Europäisches Patentamt / European Patent Office / Office européen des brevets**

(11) **EP 4 572 324 A1**

(12) **EUROPEAN PATENT APPLICATION**
published in accordance with Art. 153(4) EPC

(43) Date of publication:
**18.06.2025 Bulletin 2025/25**

(21) Application number: **23862280.7**

(22) Date of filing: **01.09.2023**

(51) International Patent Classification (IPC):
*H04Q 11/00* (2006.01)

(52) Cooperative Patent Classification (CPC):
**H04J 14/02; H04Q 11/00**

(86) International application number:
**PCT/CN2023/116463**

(87) International publication number:
**WO 2024/051586 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.09.2022 CN 202211080970**

(71) Applicant: **Huawei Technologies Co., Ltd.
Shenzhen, Guangdong 518129 (CN)**

(72) Inventors:
• **SU, Wei**
  **Shenzhen, Guangdong 518129 (CN)**
• **SUN, Liang**
  **Shenzhen, Guangdong 518129 (CN)**
• **LIU, Xiang**
  **Shenzhen, Guangdong 518129 (CN)**

(74) Representative: **Isarpatent
- Patent- und Rechtsanwälte Partg mbB
Friedrichstraße 31
80801 München (DE)**

(54) **METHOD FOR PROCESSING DATA FRAME IN OPTICAL TRANSPORT NETWORK, APPARATUS AND SYSTEM**

(57) Embodiments of this application disclose a processing method of an optical transport network frame, an apparatus, and a system. The processing method of the optical transport network frame includes a plurality of steps. A sending device maps a first optical service unit frame to the optical transport network frame in a first mapping manner. The sending device maps a second optical service unit frame to the optical transport network frame in a second mapping manner. Types of the second optical service unit frame and the first optical service unit frame are different, or types of services carried by the second optical service unit frame and the first optical service unit frame are different. Overhead information corresponding to the second mapping manner is at least partially different from overhead information corresponding to the first mapping manner. The sending device sends the optical transport network frame. Through the foregoing steps, the processing method of the optical network frame reduces processing complexity of mapping a low-rate optical service unit frame to a high-rate optical transport network frame. Optionally, the sending device maps the low-rate optical service unit frame to the optical transport network frame by using an intermediate frame.

FIG. 5

## Description

## TECHNICAL FIELD

This application relates to the field of optical communication technologies, and in particular, to a processing method of a data frame in an optical transport network, an apparatus, and a system.

## BACKGROUND

As a core technology of a backbone bearer network, an optical transport network (optical transport network, OTN) includes optical bearer containers with a plurality of rates. For example, an optical data unit 0 (optical data unit 0, ODU0) frame is a bearer container with a minimum rate in a current OTN technology. The optical data unit 0 frame has a rate of approximately 1.25 gigabits per second (Gigabits per second, Gbps), and is for carrying Ethernet service data of 1 Gbps. For another example, a rate of an optical data unit 4 (optical data unit 4, ODU4) frame is 100 Gbps.

To improve carrying efficiency, a time division multiplexing technology is currently used in the optical bearer container of the OTN. Specifically, a high-rate bearer container is divided into a plurality of fixed slot, to carry a plurality of services. Currently, the OTN can support two granularities: a 1.25G slot and a 5G slot.

To implement transmission of optical bearer containers with different rates, the OTN uses a manner of multiplexing and mapping. According to a current international technical standard, a plurality of low-rate OTN frames (for example, ODU0 frames or ODUflex frames) are mapped to a high-rate OTN frame (for example, an ODU4 or an ODUCn) by using a generic mapping procedure (Generic Mapping Procedure, GMP). In the GMP mapping manner, clock transparent transmission processing needs to be introduced when a sending device performs mapping, and a receiving device needs to correspondingly perform clock recovery. With introduction of a new low-rate OTN frame (for example, an OTN frame with a rate of 100 M), a quantity of low-rate OTN frames that can be carried by one high-rate OTN frame increases greatly. Consequently, mapping processing costs are high.

## SUMMARY

A solution of low-rate OTN frame multiplexing that is provided by a conventional technology has a problem of large mapping overheads. Therefore, embodiments of this application provide a new processing method of an optical transport network frame, an apparatus, and a system.

According to a first aspect, an embodiment of this application provides a processing method of an optical transport network frame. The method includes: mapping a first optical service unit frame to the optical transport network frame in a first mapping manner, mapping a second optical service unit frame to the optical transport network frame in a second mapping manner, where types of the second optical service unit frame and the first optical service unit frame are different, and overhead information corresponding to the second mapping manner is at least partially different from overhead information corresponding to the first mapping manner; and sending the optical transport network frame.

The optical service unit frames are mapped to the optical transport network frame in different mapping manners. In the solution provided in this embodiment of this application, overhead processing complexity of optical service unit frame mapping is reduced.

In a possible implementation, a payload area of the optical transport network frame is divided into P slots, and the P slots are arranged in an interleaved manner in a unit of a block. The first optical service unit frame is mapped to M1 slots of the P slots, and the second optical service unit frame is mapped to M2 slots of the P slots.

Specifically, the block in the foregoing implementation may have any one of the following structures.

In a first structure, a size of the block is X bytes+y bits. The y bits are for carrying the overhead information corresponding to the first mapping manner or the second mapping manner, and the X bytes are for carrying an optical service unit frame or stuff.

In a second structure, a size of the block is X bytes. One block in the M1 slots or one block in the M2 slots includes y bits, and the y bits are for carrying the overhead information corresponding to the first mapping manner or the second mapping manner.

In a third structure, an overhead area of the optical transport network frame includes y bits. The y bits are for carrying the overhead information corresponding to the first mapping manner or the second mapping manner. A size of the block is X bytes, and the X bytes are for carrying an optical service unit frame and/or stuff.

For different types of OSU frames, different frame structure designs are used, so that a quantity of bits occupied by overheads can be reduced, and bandwidth utilization is improved. It should be understood that, for the different types of OSU frames, a same frame structure parsing manner or different frame structure parsing manners of the optical transport network frame may be selected. This is not limited in this application.

In another possible implementation, the mapping a first optical service unit frame to the optical transport network frame in a first mapping manner, and the mapping a second optical service unit frame to the optical transport network frame in a second mapping manner specifically include: mapping the first optical service unit frame to a first optical service tributary unit frame in the first mapping manner; mapping the second optical service unit frame to a second optical service tributary unit frame in the second mapping manner; and multiplexing the first optical service tributary unit frame and the second optical service tributary unit frame into the optical transport network frame.

Specifically, the first optical service tributary unit frame and/or the second optical service tributary unit frame may use any one of the following structures.

In a first structure, there are p*M blocks. M represents a quantity of slots included in the first optical service tributary unit frame or the second optical service tributary unit frame. Each of the p*M blocks includes an overhead area and a payload area. A size of each of the p*M blocks is X bytes+y bits, where the y bits are for carrying mapping overhead information corresponding to the first mapping manner or the second mapping manner, and M is a positive integer greater than or equal to 1.

In a second structure, there are p*M blocks. A size of each of the p*M blocks is X bytes, where y bits in the p*M blocks are for carrying mapping overhead information corresponding to the first mapping manner or the second mapping manner, and M is a positive integer greater than or equal to 1.

In a third structure, there are y bits+p*M blocks. A size of each of the p*M blocks is X bytes, and the y bits are for carrying mapping overhead information corresponding to the first mapping manner or the second mapping manner. Optionally, the y bits are located in an overhead area of the optical transport network frame, so that bandwidth utilization of a payload area can be improved.

For different types of OSU frames, structure designs of different types of optical service tributary unit frames are used, so that a quantity of bits occupied by overheads can be reduced, and bandwidth utilization is improved.

The foregoing two implementations may have a plurality of overhead design manners, including but not limited to any one of the following plurality of examples.

In a first manner, the overhead information corresponding to the first mapping manner includes first indication information, and the overhead information corresponding to the second mapping manner includes second indication information. The first indication information indicates data or stuff carried in a block in which the first indication information is located. The second indication information indicates a minimum amount or a maximum amount of service data carried in a block in which the second indication information is located.

In a second manner, both the overhead information corresponding to the first mapping manner and the overhead information corresponding to the second mapping manner include first indication information, and the overhead information corresponding to the second mapping manner further includes second indication information. The first indication information indicates a data amount of carried service data, or indicates data or stuff carried in a block in which the first indication information is located. The second indication information indicates clock information of the carried service data.

In a third manner, the overhead information corresponding to the first mapping manner includes first indication information, and the first indication information indicates data or stuff carried in a block in which the first indication information is located. The overhead information corresponding to the second mapping manner includes data amount information that indicates carried service data and clock information that indicates the carried service data.

In a possible design, a quantity of slots that are occupied by the first optical service unit frame and that are of the optical transport network frame is determined by a bit rate of the first optical service unit frame and a bit rate of the slot.

According to a second aspect, an embodiment of this application provides an optical transport network device. The device includes a processor and a transceiver. The transceiver is configured to send an optical transport network frame, and the processor is configured to perform the method in any one of the first aspect or specific implementations of the first aspect. The sending an optical transport network frame includes: The transceiver receives the optical transport network frame sent by the processor, and sends the optical transport network frame.

According to a third aspect, an embodiment of this application provides an optical communication system. The optical communication system includes a sending device provided in any one of the first aspect or specific implementations of the first aspect and another optical transport network device. The another optical transport network device is configured to receive an optical transport network frame sent by the sending device.

In a specific implementation, the optical communication system further includes a client device. The client device is configured to send a first service and a second service to the sending device. The sending device is further configured to respectively map the first service and the second service to a first optical service unit frame and a second optical service unit frame.

According to a seventh aspect, an embodiment of this application provides a chip. The chip includes a processor and a communication interface. The processor is configured to perform the method in any one of the first aspect or specific implementations of the first aspect. The communication interface is configured to interact with the processor to complete sending or receiving of a frame.

## BRIEF DESCRIPTION OF DRAWINGS

Embodiments of this application are described below in a more detailed manner with reference to the accompanying drawings.

FIG. 1 is a schematic diagram of a possible application scenario according to an embodiment of this application;

FIG. 2 is a schematic diagram of a possible hardware structure of a network device;

FIG. 3 is a possible schematic diagram of mapping an optical service unit frame to an OTN frame;

FIG. 4 is a schematic diagram of slot division of an OTN frame according to an embodiment of this application;

FIG. 5 is a schematic flowchart of a first processing method of an optical transport network frame according to an embodiment of this application;

FIG. 6a is a schematic diagram of a first structure of an optical service tributary unit frame according to an embodiment of this application;

FIG. 6b is a schematic diagram of a second structure of an optical service tributary unit frame according to an embodiment of this application;

FIG. 6c is a schematic diagram of a third structure of an optical service tributary unit frame according to an embodiment of this application;

FIG. 7 is a schematic flowchart of a second processing method of an optical transport network frame according to an embodiment of this application;

FIG. 8 is a schematic flowchart of mapping an optical service unit frame to an optical service tributary unit frame according to an embodiment of this application;

FIG. 9 is a schematic diagram of carrying mapping overhead information by an optical service tributary unit frame shown in FIG. 6a;

FIG. 10 is another schematic diagram of carrying mapping overhead information by an optical service tributary unit frame shown in FIG. 6a; and

FIG. 11 is a schematic diagram of a possible structure of a network device.

## DESCRIPTION OF EMBODIMENTS

Some terms in this application are first described, to help a person skilled in the art has a better understanding.

(1) "A plurality of" means two or more than two. "And/or" describes an association relationship between associated objects, and three relationships may exist. For example, A and/or B may indicate three cases: Only A exists, both A and B exist, and only B exists. In addition, in the descriptions of this application, words such as "first" and "second" are merely used for distinguishing descriptions, and cannot be understood as an indication or implication of relative importance, and cannot be understood as an indication or implication of a sequence.

(2) The mathematical symbol "*" represents a sign of multiplication.

(3) Upstream or downstream. A source device A transmits data to a destination device B via a device M. In a data transmission direction, the device M is located between the device A and the device B, and may be referred to as an intermediate device. The device A is in an upstream direction of the device M, and the device B is in a downstream direction of the device M.

(4) Service data refers to data of a service that can be carried by an optical transport network. For example, the service may be an Ethernet service, a packet service (which is referred to as a PKT service), a constant bit rate service (which is referred to as a CBR service), and/or a wireless backhaul service.

(5) An optical service unit (Optical Service Unit, OSU) frame in this application is also an optical transport network frame. A rate of the optical service unit frame is at an Mbps level, for example, from 10 M to 1000 M. The optical service unit frame is for carrying low-rate service data.

(6) That A is mapped to B mentioned in this application refers to that A is encapsulated into B. For example, that an OSU frame is mapped to an OTN frame refers to that an OSU frame or an OSU signal is encapsulated into an OTN frame. Unless otherwise specified, when A is mapped to B, A usually refers to a data stream, and the data stream may have a specific frame format. B usually refers to a frame structure for carrying the data stream, or data in the data stream is placed based on the frame structure of B.

(7) Unless otherwise specified, specific descriptions of some technical features in one embodiment may also be applied to explaining corresponding technical features mentioned in another embodiment. For example, overheads and a meaning included in a block in one embodiment may also be applied to a block mentioned in another embodiment. For another example, specific examples, descriptions, and the like of an optical transport network frame may be applied to optical transport network frames mentioned in different specific embodiments or a specific example for replacing the optical transport network frame. In addition, to reflect a relationship between components in different embodiments more clearly, same or similar reference numerals are used in this application to represent components or method steps that have same or similar functions in different embodiments.

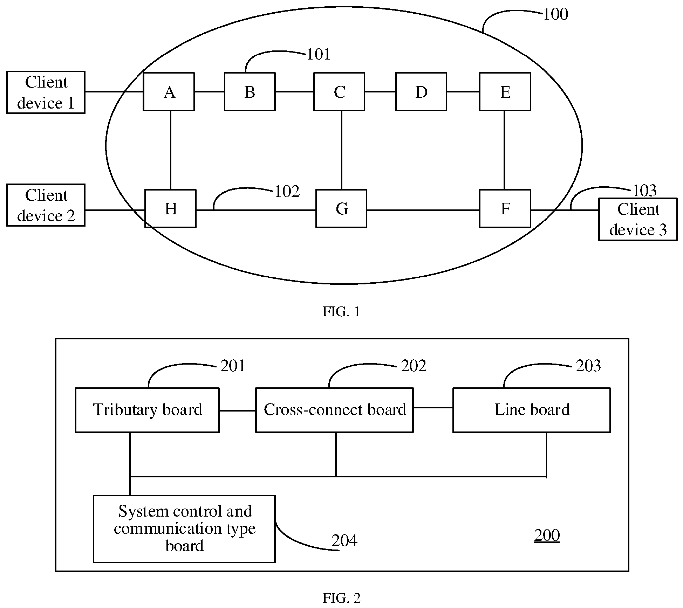

Embodiments of this application are applicable to an optical transport network, for example, an OTN, a flexible Ethernet (Flexible Ethernet, FlexE), or a metro transport network (Metro Transport Network, MTN). An OTN is usually formed by connecting a plurality of devices by using an optical fiber. Different topology types such as a line type, a ring type and a mesh type may be formed based on a specific requirement. An OTN 100 shown in FIG. 1 includes eight OTN devices 101, namely, devices A to H. 102 denotes an optical fiber, and is configured to connect two devices. 103 denotes a client service interface, and is configured to receive or send client service data. As shown in FIG. 1, the OTN 100 is configured to transmit the service data for client devices 1 to 3. The client device is connected to the OTN device by using the client service interface. For example, in FIG. 1, the client devices 1 to 3 are separately connected to the OTN devices A, H, and F.

Based on actual requirements, one OTN device may have different functions. Generally, the OTN devices are classified into optical-layer devices, electrical-layer devices, and optical-electrical hybrid devices. The optical-layer device refers to a device that can process an optical-layer signal, for example, an optical amplifier (optical amplifier, OA) or an optical add-drop multiplexer (optical add-drop multiplexer, OADM). The OA may also be referred to as an optical line amplifier (optical line amplifier, OLA), and is mainly configured to amplify an optical signal, to support transmission of the optical signal to a further distance on a premise that specific performance of the optical signal is ensured. The OADM is configured to perform space conversion on the optical signal, so that the optical signal can be output from different output ports (which are sometimes also referred to as directions). The electrical-layer device is a device capable of processing an electrical-layer signal, for example, a device capable of processing an OTN signal. The optical-electrical hybrid device is a device capable of processing an optical-layer signal and an electrical-layer signal. It should be noted that one OTN device may integrate a plurality of different functions based on a specific integration requirement. The technical solutions provided in this application are applicable to OTN devices that include an electrical-layer function and that have different forms and integration degrees.

It should be noted that a data frame structure used by an optical transport device in embodiments of this application may be an OTN frame. The OTN frame is for carrying various service data and providing rich management and monitoring functions. The OTN frame may be an optical data unit frame (Optical Data Unit-k, ODUk), an ODUCn, or an ODUflex, or an optical channel transport unit-k (optical channel transport unit-k, OTUk), an OTUCn, or a flexible OTN (FlexO) frame. A difference between the ODU frame and the OTU frame lies in that the OTU frame includes an ODU frame and OTU overheads. k represents different rate levels. For example, k=1 indicates 2.5 Gbps, and k=4 indicates 100 Gbps. Cn indicates a variable rate, and is specifically a rate that is a positive integer multiple of 100 Gbps. Unless otherwise specified, the ODU frame is any one of the ODUk, the ODUCn, or the ODUflex, and the OTU frame is any one of the OTUk, the OTUCn, or the FlexO. It should be further noted that, with development of an optical transport network technology, a new type of OTN frame may be defined, which is also applicable to this application. In addition, the method disclosed in this application is also applicable to another optical transport network frame such as a FlexE frame or an MTN frame.

FIG. 2 is a schematic diagram of a possible hardware structure of a network device, for example, the device A in FIG. 1. Specifically, an optical transport network device 200 includes a tributary board 201, a cross-connect board 202, a line board 203, an optical-layer processing board (which is not shown in the figure), and a system control and communication type board 204. Based on specific requirements, types and quantities of boards included in a network device may be different. For example, a network device serving as a core node does not have the tributary board 201. For another example, a network device serving as an edge node has a plurality of tributary boards 201, or does not have the optical cross-connect board 202. For another example, a network device that supports only an electrical-layer function may not have the optical-layer processing board.

The tributary board 201, the cross-connect board 202, and the line board 203 are configured to process an electrical-layer signal. The tributary board 201 is configured to receive and send various client services, for example, an SDH service, a packet service, an Ethernet service, and/or a fronthaul service. Further, the tributary board 201 may be divided into a client-side optical transceiver module and a signal processor. The client-side optical transceiver module may also be referred to as an optical transceiver, configured to receive and/or send service data. The signal processor is configured to map service data to a data frame and demap the service data from the data frame. The cross-connect board 202 is configured to implement data frame switching, to complete switching between one or more types of data frames. The line board 203 mainly processes a line-side data frame. Specifically, the line board 203 may be divided into a line-side optical module and a signal processor. The line-side optical module may be referred to as an optical transceiver, and is configured to receive and/or send the data frame. The signal processor is configured to multiplex and demultiplex the line-side data frame, or perform mapping and demapping on the line-side data frame. The system control and communication type board 204 is configured to implement system control. Specifically, the system control and communication type board 204 may collect information from different boards, or send a control instruction to a corresponding board. It should be noted that, unless otherwise specified, there may be one or more specific components (for example, a signal processor). This is not limited in this application. It should be further noted that a type of a board included in a device, a function design of the board and a quantity of boards are not limited in this application. It should be noted that in specific implementation, the foregoing two boards may be designed as one board. In addition, the network device may further include a backup power supply, a fan for heat dissipation, and the like.

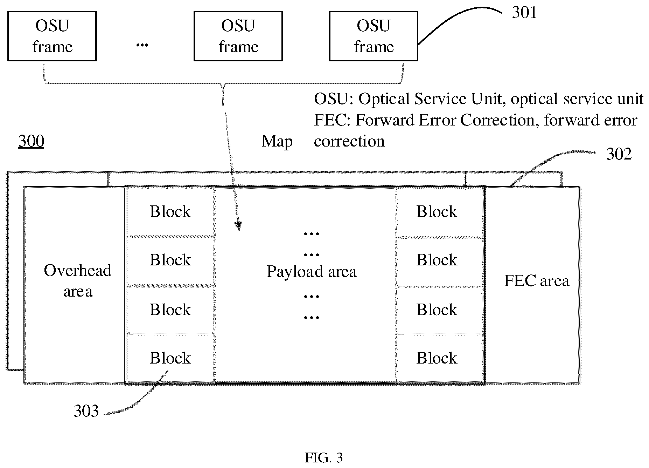

FIG. 3 is a possible schematic diagram of mapping an optical service unit (OSU) frame to an OTN frame. As shown in FIG. 3, an OTN frame 302 is an example of an optical transport network frame. The OTN frame 302 is a structure of four rows and a plurality of columns, and includes an overhead area, a payload area, and a forward error correction (Forward Error Correction, FEC) area. The payload area is divided into a plurality of blocks. Each block occupies a position of a fixed length (which may also be referred to as a size) in the payload area of the OTN frame, for example, 16 bytes+2 bits, or for another example, 16 bytes. It should be understood that the OTN frame 302 is merely an example. Another deformed OTN frame is also applicable to this application, for example, an OTN frame that does not include an FEC area, or for another example, a frame structure in which a quantity of rows and a quantity of columns are different from those of the OTN frame 302. It should be understood that the block may also be referred to as a slot, a slot block, a time slice, or the like. A name of the block is not limited in this application.

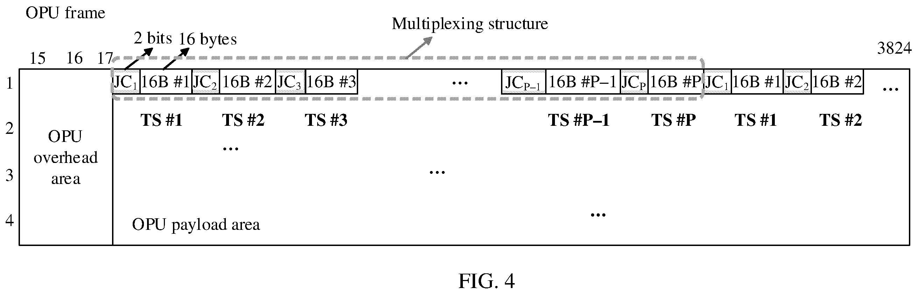

FIG. 4 is a schematic diagram of slot division of an OTN frame according to an embodiment of this application. As shown in FIG. 4, a payload area of an OPU frame with four rows and 3824 columns is divided into a plurality of slots (Tributary Slots or Time Slots, TSs) (the payload area is divided into P slots in FIG. 4). Each slot is arranged in an interleaved manner in a block size, to form a plurality of multiplexing structures. As shown in the figure, a size of a block is 16 bytes+2 bits, where the 2 bits are referred to as a justification control (Justification Control, JC) field in FIG. 4. It should be understood that the field may also be referred to as an overhead area, an overhead part, or the like. TS #1 includes a plurality of $JC_1$ and 16B #1 (in other words, a plurality of blocks). Similarly, TS #P includes a plurality of $JC_P$ and 16B #P. A plurality of blocks of the P slots are sequentially arranged in an interleaved manner, to form a periodic arrangement. In other words, the plurality of blocks of the P slots are arranged as: the 1st block of TS #1, the 1st block of TS #2, ..., and the 1st block of TS #P; the 2nd block of TS #1, the 2nd block of TS #2, ..., and the 2nd block of TS #P; an $F^{th}$ block of TS #1, an $F^{th}$ block of TS #2, ..., an $F^{th}$ block of TS #P, and the like. The multiplexing structure, as shown in FIG. 4, refers to a group of structures including a block of all slots. It should be understood that the multiplexing structure may alternatively be a structure including some continuous blocks of all slots. In brief, one multiplexing structure includes P slots, and includes p*P blocks. The multiplexing structure includes a specific structure. Therefore, the multiplexing structure is subsequently referred to as a multiplexing structure frame.

It should be understood that a value of P depends on a rate of the OPU frame and a rate of a slot. For example, the OPU frame is an OPU0 frame, and the rate of the slot is 10.4 Mbps. Based on a rate of a payload area of the OPU0 frame and the rate of the slot, the OPU frame may be calculated to include 119 slots, in other words, P=119. For example, the multiplexing structure includes one block in each slot (in other words, p=1). It is assumed that a size of each block is 16 bytes (16 Bytes, 16B)+2 bits. To improve efficiency of slot division, no stuffing is performed on the OPU frame. The slot division is performed in a multiframe manner. It may be learned that 65 OPU0 frames exactly include 512 multiplexing structure frames. If p=8, the 65 OPU0 frames exactly include 64 multiplexing structure frames.

Unless otherwise specified, in this application, the multiplexing structure frame may be referred to as an optical service tributary unit group (Optical Service Tributary Unit Group, OSTUG) frame. It should be understood that a multiplexing structure of one block including all slot blocks may also be referred to as a P frame, a slot multiplexing frame, a slot multiplexing group, a multiplexing frame, a multiplexing cycle, or the like. This is not limited in this application.

According to a current international standard, a low-rate optical transport network frame is mapped to a high-rate optical transport network frame in a GMP mapping manner. The GMP manner has processing complexity. After an optical transport network frame with a rate at an Mbps level is introduced, the problem becomes more serious because a quantity of low-rate services increases. Therefore, an embodiment of this application provides a new processing method of an optical transport network frame. A mapping manner corresponding to a low-rate optical transport network frame is determined by identifying a type of the low-rate optical transport network frame, and corresponding overhead processing is performed, so that processing complexity of mapping overheads is reduced.

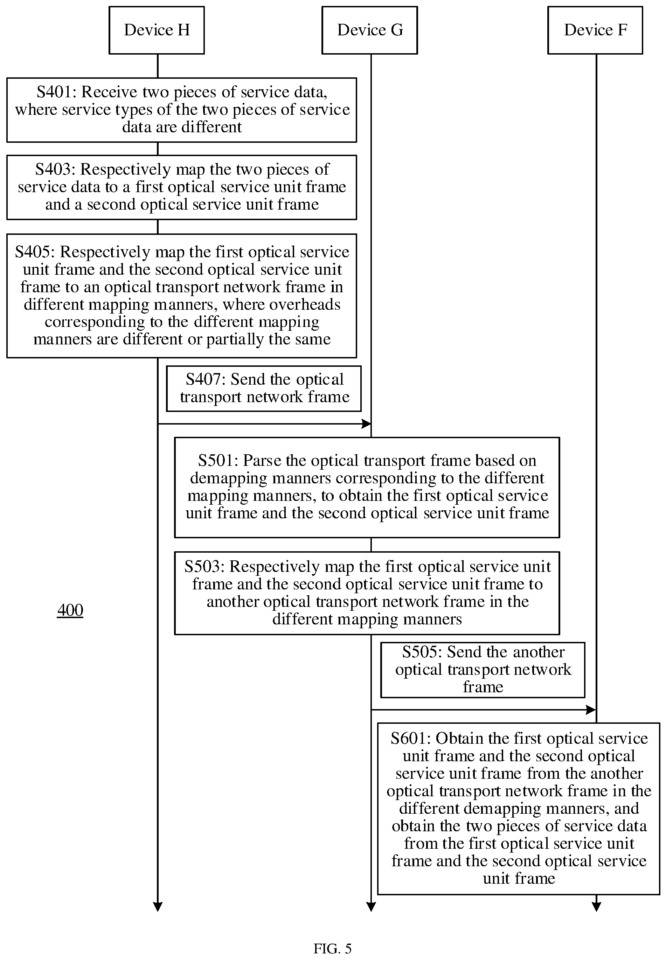

FIG. 5 is a schematic flowchart of a first processing method of an optical transport network frame according to an embodiment of this application. As shown in FIG. 5, a method 400 includes the following plurality of steps. In this embodiment, an example in which a sending device is the device H shown in FIG. 1, an intermediate device is the device G shown in FIG. 1, and a receiving device is the device F shown in FIG. 1 is used.

S401: Receive two pieces of service data, where service types of the two pieces of service data are different.

S403: Respectively map the two pieces of service data to a first optical service unit frame and a second optical service unit frame.

In this embodiment, steps S401 and S403 are performed by the device H. Specifically, the device H receives the two pieces of service data, and respectively maps the two pieces of service data to different OSU frames. For example, the service type of the first service data is PKT, and the service type of the second service data is CBR.

S405: Respectively map the first optical service unit frame and the second optical service unit frame to an optical transport network frame in different mapping manners, where overheads corresponding to the different mapping manners are different or partially the same.

S407: Send the optical transport network frame.

In this embodiment, steps S401 to S407 are performed by the device H. Specifically, an example in which the service types of the data services are respectively PKT and CBR is used. After respectively mapping the two OSU frames to the OTN frame in a stuff mapping manner and a GMP-like manner, the device H sends the OTN frame to the intermediate device G.

Selection of the mapping manners of the OSU frames depends on types of the OSU frames or the types of the service data carried by the OSU frames. In an implementation, the mapping manners of the OSU frames are determined by the types of the OSU frames. For example, the OSU frames are classified into two types: an OSU (PKT) and an OSU (CBR). It should be understood CBR or PKT may be a general name of one or more types of services carried by the OSU frame. In another implementation, the mapping manners of the OSU frames are determined by the types of the services carried by the OSU frames.

In a specific implementation, the device H further includes an operation of determining the mapping manners based on the types of the OSU frames or the types of the services carried by the OSU frames. In another specific implementation, the mapping manners may be fixed through configuration. For example, the mapping manners are directly determined or configured by using tributary port information. In this case, the types of the OSU frames or the types of the service data carried by the OSU frames do not need to be determined explicitly. To distinguish different mapping manners of the OSU frames, the OTN frame carries information that indicates the mapping manners of the OSU frames. For example, multiplexing structure indication overheads in the OTN frame may indicate the types of the OSU frames, or the types of the services carried by the OSU frames, to indicate mapping types of the OSU frames. For another example, mapping manner information of the OSU frames may be indicated by using a dedicated field in an overhead area in the OTN frame.

Overhead information of the two mapping manners may be completely different or partially different. The following uses an example in which the overhead information corresponding to the two mapping manners is completely different.

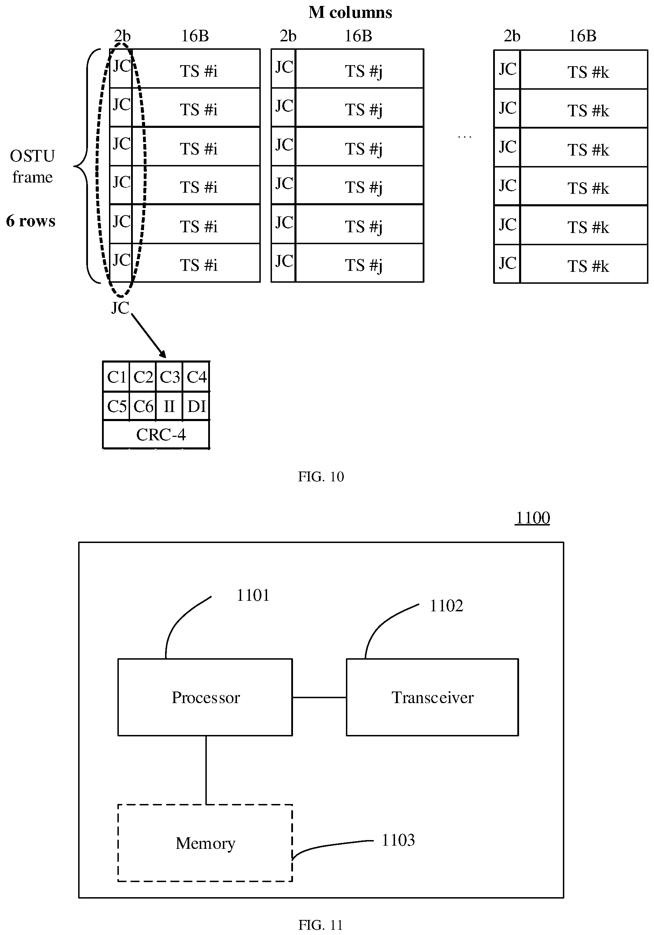

The stuff mapping manner refers to a manner in which when an OSU frame bit stream is placed in the OTN frame, stuff information is placed in some positions of the OTN frame, to adapt to a rate difference between the OSU frame bit stream and the OTN frame. Corresponding overheads are indication information of stuff or data. Specifically, an example in which a size of a block included in the OPU frame in FIG. 4 is 16B+2b (b indicates a bit) is used. In this case, different values of 2b indicate that data or stuff is placed in 16B corresponding to 2b. For example, 10 indicates the data and 01 indicates the stuff. It should be understood that, that the indication information is 2b is merely an example. To reduce overheads, a single bit may be used. For more descriptions of the stuff mapping manner, refer to FIG. 10. Details are not described herein.

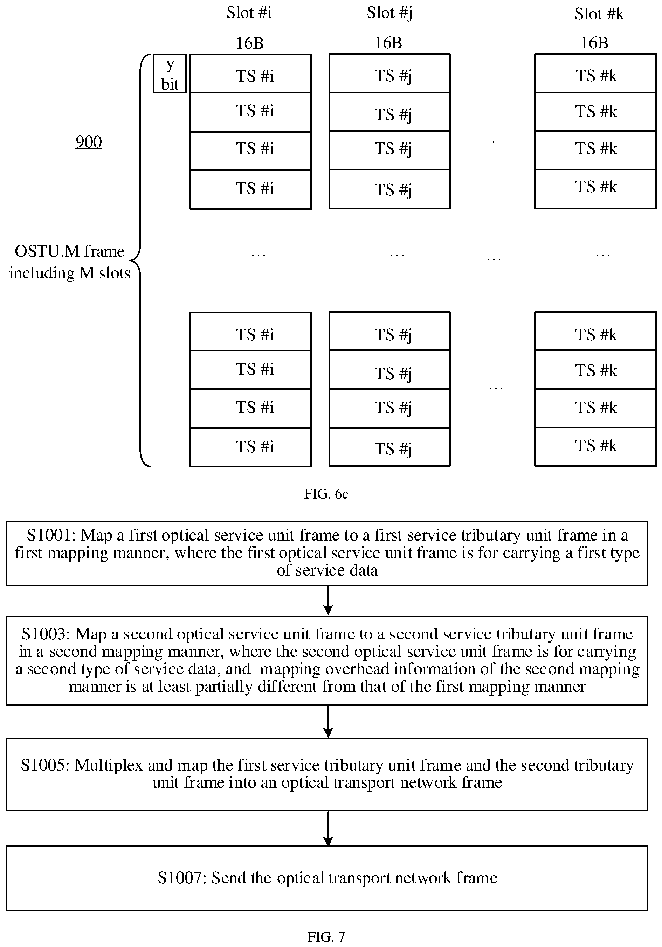

An improved GMP mapping manner refers to a manner in which when an OSU frame bit stream is placed in the OTN frame, the bit stream is written into the OTN frame by using two different sizes, to adapt to a rate difference between the OSU frame bit stream and the OTN frame. Corresponding overheads are indication information that indicates a maximum data amount or a minimum data amount. Specifically, information about the two data amounts is obtained through calculation or presetting, and is then indicated by using one or two bits. Specifically, an example in which a size of a block included in the OTN frame is 16B+1b is used. Different values of 1b indicate that a maximum data amount or a minimum data amount is placed in 16B corresponding to 1b. For example, 1 indicates the maximum data amount, and 0 indicates the minimum data amount. It should be understood that, that the indication information is 1b is merely an example. 2b shown in FIG. 4 may alternatively be used. For more descriptions of the improved GMP mapping manner, refer to related descriptions in FIG. 7. Details are not described herein.

It should be understood that a same possible value of the mapping overheads corresponding to the foregoing two mapping manners does not indicate same overhead information. In this application, whether the overhead information is the same refers to whether meanings or functions of the overhead information are the same. It should be understood that the foregoing descriptions about content such as an overhead location and the overhead information are merely examples. For more other examples, refer to related descriptions in FIG. 7. Details are not described herein.

S501: Parse the optical transport network frame based on demapping manners corresponding to the different mapping manners, to obtain the first optical service unit frame and the second optical service unit frame.

S503: Respectively map the first optical service unit frame and the second optical service unit frame to another optical transport network frame in the different mapping manners.

S505: Send the another optical transport network frame.

In this example, steps S501 to S505 are performed by the device G. S501 is an inverse process of step S405. Step S503 is similar to step S405, and a difference lies in that the two OSU frames are mapped to the another OTN frame. The two steps are respectively performed by the intermediate device G at an ingress port and an egress port. An objective is to obtain, through parsing, OSU frames that need to be sent to different downstream devices, send the OSU frames to corresponding egress ports by using a cross-connect board, encapsulate the OSU frames into the OTN frame, and then send the OTN frame.

It should be understood that, depending on a specific mapping manner, steps included in the demapping manners mentioned in step S501 are different. For example, if the mapping manners carry clock information, the intermediate device G further needs to correspondingly perform an operation of clock recovery when parsing the OTN frame in the corresponding demapping manners to obtain the OSU frames.

S601: Obtain the first optical service unit frame and the second optical service unit frame from the another optical transport network frame in the different demapping manners, and obtain the two pieces of service data from the first optical service unit frame and the second optical service unit frame.

In this example, step S601 is performed by the destination device F. Specifically, the device F performs an inverse operation of the device H. The inverse operation includes an operation of respectively parsing the another received optical transport network frame in the demapping manners corresponding to the mapping manners used by the device F, to obtain the first OSU frame and the second OSU frame, and also includes an operation of respectively obtaining the two pieces of service data from the two OSU frames obtained through parsing. For an OSU (CBR) type, clock information of a carried CBR service further needs to be recovered after service data is obtained through parsing.

Different mapping manners are used based on different types of the OSU frames. In the processing method of the OTN frame provided in this embodiment of this application, mapping processing complexity of mapping a low-rate OSU frame to a high-rate OTN frame is reduced. Optionally, to further reduce the mapping overheads, this application provides a mapping manner that is more simplified than a mapping manner specified in an existing standard, so that processing overhead complexity is further reduced.

In the method provided in the foregoing embodiment, the OSU frames are directly mapped to the OTN frame. The following provides another embodiment. In another embodiment, the OSU frames are mapped to the OTN frame by using an intermediate frame. Specifically, the OSU frames are first mapped to a corresponding intermediate frame, and then a plurality of intermediate frames that carry different OSU frames are multiplexed into the OTN frame. It should be understood that the multiplexing refers to a process of mapping a plurality of data streams to one OTN frame. Specifically, two intermediate frames may be mapped to the OTN frame in a block polling insertion manner.

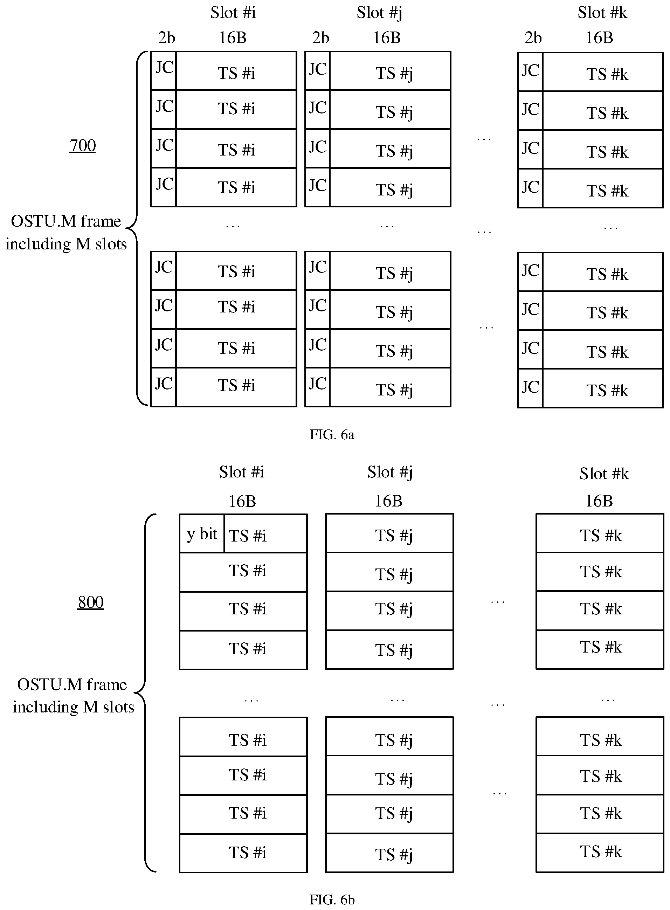

In this embodiment, the intermediate frame is referred to as an optical service tributary unit (Optical Service Tributary Unit, OSTU) frame, an OSTU.M frame, an optical service data tributary unit (Optical Service Data Tributary Unit, OSDTU) frame, or an optical data tributary unit (Optical Data Tributary Unit, ODTU) frame. M represents a quantity of slots included in the OSTU frame. FIG. 6a, FIG. 6b, and FIG. 6c are schematic diagrams of three possible structures of the OSTU frame. In all the three structures, the OSTU.M frame includes M slots. Specifically, there are totally M slots: a slot #i, a slot j, ..., and a slot #k. A difference lies in that specific structures of the included slots are different. The following separately provides descriptions.

In FIG. 6a, an example in which the OTN frame in FIG. 3 is divided into a plurality of blocks, and each block includes a 2b JC overhead field and a 16B payload block (Payload Block, PB) is used. The OSTU.M frame includes p*M blocks, where p represents a quantity of blocks in one slot included in one multiplexing structure. It should be understood that the p*M blocks of the OSTU.M frame are all located in a payload area of the OTN frame. The OSTU.M frame may further carry another overhead information, for example, overhead information for bandwidth adjustment.

In FIG. 6b, the OSTU.M frame also includes p*M blocks, and a size of each block is 16B. There are y bits in a first block of the 1st slot included in the OSTU.M frame, and the y bits are for carrying overhead information. Remaining (16B-y bits) may be for carrying service data or serve as a reserved field. It should be noted that the y bits may alternatively be included in a plurality of alternate blocks of the first slot. Other blocks included in the OSTU.M frame are for carrying service data. It should be understood that, as shown in FIG. 4, a payload area of an OTN frame may be divided into P slots, and M slots are selected from the P slots for an OSTU.M frame, and are preconfigured, because the 1st block of a specific slot in the P slots that carries the overhead information of the y bits is flexible.

In FIG. 6c, the OSTU.M includes p*M blocks+y-bit information. A size of each block is 16 bytes, and the y bits are for carrying overhead information. Preferably, the y bits are located in an overhead area, so that bandwidth utilization of a payload area can be improved, and a processing process of parsing the OTN frame can be further simplified. In addition, y bits may be separately placed in a plurality of rows of the overhead area of the OPU frame, for example, located in the 1st row, the 2nd row, and the 3rd row of the four rows in the OPU frame structure.

FIG. 7 is a schematic flowchart of a second processing method of an optical transport network frame according to an embodiment of this application. As shown in FIG. 7, a processing method 1000 includes the following plurality of steps. In this embodiment, an example in which an execution body is a device A is used. Specifically, the device A may be a source device, in other words, the device A is a device that is in an OTN and that is directly connected to a client device. Alternatively, the device A may be an intermediate device, in other words, the device A is not directly connected to the client device.

S1001: Map a first optical service unit frame to a first service tributary unit frame in a first mapping manner, where the first optical service unit frame is for carrying a first type of service data.

Specifically, the device A maps the first OSU frame to the first OSTU frame in the first mapping manner. In this embodiment, an example in which a service carried by the first OSU frame is a CBR service is used for description.

S1003: Map a second optical service unit frame to a second service tributary unit frame in a second mapping manner, where the second optical service unit frame is for carrying a second type of service data, and mapping overhead information of the second mapping manner is at least partially different from that of the first mapping manner.

Specifically, the device A maps the second OSU frame to the second OSTU frame. In this embodiment, an example in which a service carried by the second OSU frame is a PKT service is used for description.

Descriptions are provided with reference to structures of different OSTU frames provided in FIG. 6a to FIG. 6c. A mapping manner used for the first OSU frame may be an existing GMP mapping manner or a mapping manner in which clock information needs to be transferred, such as an improved GMP mapping manner. However, a mapping manner used for the second OSU frame may be a simple (in other words, no clock needs to be transferred) mapping manner, such as a stuff mapping manner.

In a specific implementation, a structure of the OSTU frame is the structure shown in FIG. 6a, and mapping manners used for the first OSU frame and the second OSU frame are respectively the improved GMP mapping manner and the stuff mapping manner.

For a step of mapping the first OSU frame to the OSTU frame, overhead information carried in a JC field indicates whether a maximum service data amount or a minimum service data amount is carried in a 16B PB corresponding to the JC field. "Corresponding" herein refers to a 16B PB adjacent to the JC field. Alternatively, in specific implementation, JC may be corresponding to one 16B PB by using a preset rule, so that each 16B PB is in a one-to-one correspondence with each JC. For example, a plurality of 2-bit JC fields are placed together, and a plurality of 16B PBs are placed together, but they are in a one-to-one correspondence.

Specifically, the maximum service data amount ($C_{8, max}$) and the minimum service data volume ($C_{8, min}$) may be respectively obtained by using the following formula 1 and formula 2:

$$C_{8,max} = ceiling\left(\frac{f_{client} * (1 + 20ppm)}{f_{server} * (1 - 20ppm)} \times 16\right) \quad \text{(formula 1)}$$

$$C_{8,min} = floor\left(\frac{f_{client} * (1 - 20ppm)}{f_{server} * (1 + 20ppm)} \times 16\right) \quad \text{(formula 2)}$$

It should be noted that, the foregoing formulas are calculated at a single-byte mapping granularity. If another mapping granularity is used, calculation may be performed by using a similar formula, where ceiling () indicates rounding up, floor () indicates rounding down, $f_{client}$ indicates a bit rate of the OSU frame, and $f_{server}$ indicates a bit rate of a payload part of the OSTU frame.

Specifically, it is determined, based on a waterline in a buffer that stores an OSU signal, whether the maximum service data amount or the minimum data amount is to be mapped. When the waterline is lower than a preset value of the waterline, data of the minimum data amount of bytes in the OSU signal is mapped to a 16B PB, and a JC field corresponding to the 16B PB is set to 10 (the value is an example). When the value of the waterline is greater than the preset value of the waterline, data of a maximum data amount of bytes in the OSU signal is mapped to a 16B PB, and a JC field corresponding to the 16B PB is set to 01 (the value is an example). This manner is referred to as the improved GMP mapping manner in this application, and is greatly different from a GMP defined in an existing standard. For example, overheads are simple. This manner may also be referred to as a standard GMP manner or a manner similar to a GMP manner.

It should be noted that, a sending device transmits a quantity of bytes of service data carried in each PB, and a receiving device may obtain, by using information about the quantity of bytes, a total amount of service data sent by the sending device in a single OSTU.M frame, to obtain clock information of a corresponding OSU signal.

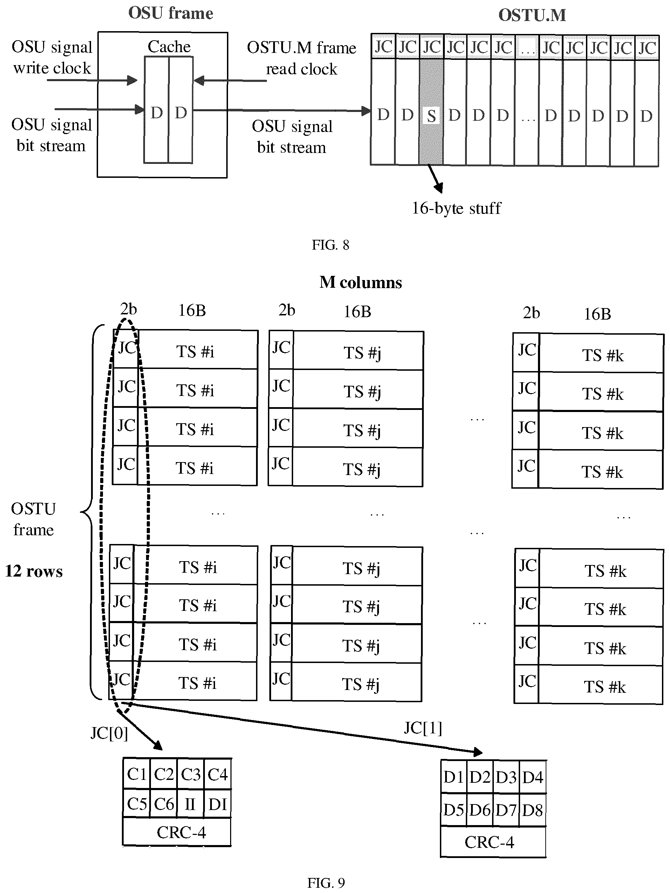

For a step of mapping the second OSU frame to the OSTU frame, the overhead information carried in a JC field indicates that stuff or data is carried in a 16B PB corresponding to the JC field. FIG. 8 is a schematic flowchart of mapping an optical service unit frame to an optical service tributary unit frame according to an embodiment of this application. As shown in FIG. 8, an OSU signal bit stream is written into a cache based on an OSU signal write clock. When an OSU frame is mapped to an OSTU.M frame, data of the OSU frame is read from the cache based on a read clock of the OSTU.M frame. It should be understood that a clock source of the OSU signal write clock is not limited in this embodiment, for example, may be a local clock source. A mapping granularity of 16B is used as an example. Specifically, when there is sufficient data (to be specific, at least 16B) of the OSU signal in the cache, 16B data is mapped to one 16B PB, and a JC field corresponding to the 16B PB is set to 10 (the value is an example, and indicates that valid data is carried). When the data of the OSU frame in the cache is insufficient, a 16-byte stuff is written into the 16B PB, and the JC field corresponding to the 16B PB is set to 01 (the value is an example, and indicates that the stuff is carried, in other words, invalid data). This method is referred to as a stuff mapping manner (Stuff Mapping Procedure, SMP) in this application.

In another implementation, the structure of the OSTU frame is the structure shown in FIG. 6b, and mapping manners used for the first OSU frame and the second OSU frame are respectively an existing GMP mapping manner and a simplified GMP mapping manner.

Specifically, a value of y is four bytes, and overheads corresponding to the GMP mapping manner of the first OSU frame include $C_m$ and $C_{nD}$, which occupy two bytes each. $C_m$ refers to a data amount of an OSU signal that is carried by one OSTU frame and that is in a unit of an m-bit granularity. $C_{nD}$ indicates clock information of the OSU signal. For example, m=128 indicates that a mapping granularity is 16B. n=1 indicates that clock precision may be indicated to 1 bit. During actual application, a length may be selected for a value of y based on a required value range, and m and n may also be determined based on a requirement. This is not limited in this application. For a calculation manner of $C_m$ and $C_{nD}$, refer to descriptions in an existing international standard document G.709 (06/2016). Details are not described herein.

It should be noted that, in the structure shown in FIG. 6b, the 1st 16B includes y bits, and remaining bits may be for carrying other overheads or serve as service data to be carried.

Overheads corresponding to the simplified GMP mapping manner of the second OSU frame includes only $C_m$, in other words, the y bits are only for carrying $C_m$. In other words, mapping overheads for both the first OSU frame and the second OSU frame include $C_m$, but the mapping manner of the first OSU frame further includes overheads that are different from that of the mapping manner for the second OSU frame, namely, $C_{nD}$.

It should be noted that the foregoing mapping overheads may alternatively be carried by using the structure of the OSTU frame shown in FIG. 6a. FIG. 9 is a schematic diagram of carrying mapping overhead information by an optical service tributary unit frame shown in FIG. 6a. FIG. 9 is described by using an example in which the OSTU frame includes a block structure of 12 rows*M columns, in other words, includes 12*M blocks. Specifically, a JC field of the 1st slot of the OSTU frame, to be specific, 12*2 bits, that is, 24 bits, indicates $C_m$ and $C_{nD}$. Specifically, 12 bits (namely, JC[0] in FIG. 9) are formed by using the 1st bit of the JC field, for carrying $C_m$. As shown in FIG. 9, content included in the 12 bits is shown in Table 1.

**Table 1 Meaning of the JC[0] field shown in FIG. 9**

| Field name | Length and meaning |
|---|---|
| $C_1$, $C_2$, ..., $C_6$ | A length is 6 bits. The field represents $C_m$, and indicates a range from 0 to 63. |
| II | A length is 1 bit, and a specific value (for example, 1) indicates that a value of $C_m$ increases. The field is optional. |
| DI | A length is 1 bit, and a specific value (for example, 1) indicates that a value of $C_m$ decreases. The field is optional. |
| CRC-4 | A length is 4 bits, and the field is for checking another bit of the JC[0] field. |

The 12 bits are placed in JC positions of different blocks that belong to a same slot. A distance between the 12 bits is one row (P blocks). In addition, there is a CRC-4 check, so that transmission reliability is greatly improved and a burst bit error on a line is tolerated. In another actual implementation, JC of a plurality of slots may be combined, to extend larger overhead space and carry a larger indication range of $C_m$.

Another 12 bits (namely, JC[1] in FIG. 9) are formed by using the 2nd bit of the JC field, for carrying $C_{nD}$ (to be specific, D1 to D8 in FIG. 9). For example, $C_{nD}$ is $C_{1D}$, and the clock precision may be indicated to 1 bit. 8-bit $C_{1D}$, where a range from 0 to 255 may be represented, indicates the clock information of the OSU signal. In addition, 4-bit CRC is for check protection. In specific implementation, the clock precision may further be considered to be byte precision $C_{8D}$. The 12 bits are placed in JC positions of different blocks that belong to a same slot. A distance between the 12 bits is one row (P blocks). In addition, there is a CRC-4 check, so that transmission reliability is greatly improved and a burst bit error on a line is tolerated.

In a specific example, a value of $C_{128}$ is p*M. (To be specific, a quantity of 16B included in one OSTU frame) or p*M-1. When the value of $C_{128}$ is p*M-1, the 1st block of the OSTU.M frame may be for 16-byte stuff, and other blocks may be for carrying P*M-1 pieces of 16-byte OSU data. When the value of $C_{128}$ is p*M, it represents that all P*M blocks carry 16-byte OSU data. In another specific example, the value of $C_{128}$ is p*M-1 or p*M-2, which means that at most two 16 bytes can be stuffed in an OSTU.M. When the value of $C_{128}$ is p*M-1, the 1st block of the OSTU.M can be for 16-byte stuff, and other blocks can be for carrying P*M-1 pieces of 16-byte OSU data. When the value of $C_{128}$ is p*M-2, two blocks of the OSTU.M may be restricted for 16-byte stuff, for example, the 1st block of the OSTU.M and an intermediate block of the OSTU.M are restricted, and other blocks are for carrying P*M-2 pieces of 16-byte OSU data. A position of restriction and stuff is not limited.

It should be understood that the structure shown in FIG. 9 may be for mapping of two different types of OSU frames. For example, when a type of the OSU frame is an OSU (CBR) type, two overhead fields JC[0] and JC[1] are used. When a type of the OSU frame is an OSU (PKT) type, only the JC[0] field is used. In another possible implementation, the different types of OSU frames may also be parsed out in different manners. When the type of the OSU frame is the OSU (CBR) type, the two overhead fields JC[0] and JC[1] shown in FIG. 9 are used. When the type of the OSU frame is the OSU (PKT) type, the JC field shown in FIG. 10 is used. FIG. 10 is another schematic diagram of carrying mapping overhead information by an optical service tributary unit frame shown in FIG. 6a. FIG. 10 is described by using an example in which a block structure of 6 rows*M columns included in an OSTU frame is used as a unit to carry a value of $C_m$. A JC field of the 1st slot of the OSTU frame, to be specific, 6*2 bits, that is, 12 bits, indicates $C_m$. A field format of $C_m$ is shown in Table 1, and details are not described herein again. The OSU (PKT) is carried in this manner, so that a cycle of the OSTU frame is further reduced, in other words, one OSTU frame includes two OSTU subframes, and each subframe carries a corresponding value of $C_m$. This facilitates lossless bandwidth adjustment processing.

In a possible alternative implementation, the value of $C_m$ may be represented by using an amount of stuff information. Specifically, FIG. 9 is used as an example. If a block in the OSTU frame includes stuff data X, a total quantity of 16 bytes that can be carried is T. If X is stuffed in the fields $C_1$ to $C_6$, the receiving device may obtain the value of $C_m$ through T-X. Generally, stuff in the OSTU frame is small. Therefore, carried stuff can reduce overheads, represent a larger range of values, and improve overhead utilization.

In another possible alternative implementation, the value of $C_m$ may be represented by transferring a quantity of variations. Specifically, FIG. 10 is used as an example. A reference value is pre-agreed, and each OSTU frame transfers only an incremental value of $C_m$ relative to the reference value, to be specific, $C_m$-the reference value. Only the variation is carried, so that a larger range of values can be represented, and the overhead utilization is improved.

In still another implementation, a structure of the OSTU frame is the structure shown in FIG. 6c, and mapping manners used for the first OSU frame and the second OSU frame are respectively an enhanced stuff mapping manner and a stuff mapping manner. The enhanced stuff mapping manner means that a value of $C_{nD}$ obtained based on an existing GMP mapping manner is added to overheads carried in the stuff mapping manner described above, to transmit clock information. Different from the stuff manner described above, y bits do not indicate whether each block carries data or stuff, but indicates a possible stuff pattern. For example, if a total of 16 different stuff positions may exist in one OSTU frame, a value of y bits is encoded to represent the 16 different possibilities. After receiving a corresponding value, the receiving device may obtain, based on the value, a position where stuff is placed in the OSTU frame, to obtain an amount of data carried by the OSTU frame. Fewer bit values are for transmitting data amount information. This improves the overhead utilization.

In another optional implementation, the frame structure in FIG. 6c may alternatively be for carrying the overhead information in FIG. 9 or FIG. 10. Different from that in FIG. 6a, the y bits in FIG. 6c are for carrying $C_m$ and $C_{nD}$.

It should be understood that the frame structures in the foregoing three specific implementations may be any one of the three structures described in this application or variations thereof. In addition, the mapping manners of the OSU frame carrying the CBR service and the OSU frame carrying the PKT service are merely examples. In specific implementation, different mapping manners may be selected based on a requirement. This is not limited in this application.

It should be noted that, during actual application, any one of the foregoing three types of OSTU frames may be used for an OSU frame of a type. Different OSU frames may use different structures of the OSTU frame, so that the receiving device obtains the OSU frame through parsing based on the corresponding structure of the OSTU frame. This is not limited in this application.

S1005: Multiplex the first service tributary unit frame and the second tributary unit frame into an optical transport network frame.

Specifically, the device A multiplexes the two OSTU frames that carry the OSU signal into the OTN frame. For example, a synchronous mapping manner may be used. Specifically, the OSTU frames occupy a slot corresponding to the OTN frame. It should be understood that this step is not necessary. In other words, if the OSTU frame and the OTN frame are constructed based on a position in the cache, a slot allocated to the OSTU frame in the OTN frame may form a logical OSTU frame. When the OSU frame is mapped to the OSTU frame, the OSU frame is mapped to the OTN frame. In specific implementation, one-step mapping or two-step mapping is used. This is not limited in this application.

S1007: Send the optical transport network frame.

Specifically, the device A sends the processed OTN frame to a downstream device.

The OSU frame is mapped to the OSTU frame in mapping manners that are different due to types. In this embodiment of this application, mapping processing of a low-rate OTN frame is simplified, and mapping complexity is reduced.

FIG. 11 is a schematic diagram of a possible structure of a network device. As shown in FIG. 11, a network device 1100 includes a processor 1101, a transceiver 1102, and a memory 1103. The memory 1103 is optional. The network device 1100 may be used in a sending device or a receiving device.

When the network device 1100 is used in a sending device, the processor 1101 is configured to implement the sending device shown in FIG. 5 or the method performed in FIG. 7. In an implementation process, steps of a processing flow may be implemented, by using an integrated logic circuit of hardware in the processor 1101 or instructions in a form of software, to complete the method performed by the sending node in the foregoing accompanying drawings. The transceiver 1102 is configured to receive an optical transport network frame, to send the optical transport network frame to a peer device (which is also referred to as a receiving device) and/or receive an optical transport network frame sent from the peer device, to send the optical transport network frame to the processor 1101 for processing. In addition, the transceiver 1102 is further configured to receive configuration information from a network management system, and send the configuration information to the processor 1101.

When the network device 1100 is used in a receiving device, the processor 1101 is configured to implement the receiving device shown in FIG. 5 or the receiving device corresponding to FIG. 7. In an implementation process, steps of a processing flow may be implemented, by using an integrated logic circuit of hardware in the processor 1101 or instructions in a form of software, to complete the method performed by a receiving-side device in the foregoing accompanying drawings. The transceiver 1102 is configured to receive an optical transport network frame sent by a peer device (which is also referred to as a sending device), to send the optical transport network frame to the processor 1101 for subsequent processing and/or send an optical transport network frame received from the processor 1101 to the peer device. In addition, the transceiver 1102 is further configured to receive configuration information from a network management system, and send the configuration information to the processor 1101 for processing.

The memory 1103 may be configured to store instructions, so that the processor 1101 may be configured to perform the steps mentioned in the foregoing figure. Alternatively, the memory 1103 may be configured to store other instructions, to configure a parameter of the processor 1101 to implement a corresponding function. The memory 1103 may be further configured to store service data or an optical transport network frame, so that the processor processes the service data and the optical transport network frame.

It should be noted that, in a diagram of a hardware structure of the network device shown in FIG. 2, the processor 1101 and the memory 1103 may be located on a tributary board, or may be located in a tributary and line integrated board. Alternatively, there are a plurality of processors 1101 and memories 1103, which are respectively located on a tributary board and a line board, and the two boards cooperate to complete the foregoing method steps.

It should be noted that the apparatus in FIG. 11 may also be configured to perform the method steps mentioned in the embodiment variants or optional solutions shown in the foregoing accompanying drawings. Details are not described herein again.

In this embodiment of this application, the processor 1101 may be a general-purpose processor, a digital signal processor, an application-specific integrated circuit, a field programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor or any conventional processor, or the like. The steps of the method disclosed with reference to embodiments of this application may be directly performed by a hardware processor, or may be performed by using a combination of hardware and software units in the processor. Program code executed by the processor 1101 to implement the foregoing method may be stored in the memory 1103. The memory 1103 is coupled to the processor 1101. The coupling in this embodiment of this application may be an indirect coupling or a communication connection between apparatuses, units, or modules in an electrical form, a mechanical form, or another form, and is used for information exchange between the apparatuses, the units, or the modules. The processor 1101 may operate in collaboration with the memory 1103. The memory 1103 may be a non-volatile memory, for example, a hard disk drive (hard disk drive, HDD), or may be a volatile memory (volatile memory), for example, a random access memory (random access memory, RAM). The memory 1103 is any other medium that can be configured to carry or store expected program code in an instruction form or a data structure form and that can be accessed by a computer, but is not limited thereto.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application further provides a chip. The chip includes a processor and is configured to implement functions in any one or more of the foregoing embodiments, for example, obtaining or processing a data frame in the foregoing methods. Optionally, the chip further includes a memory, and the memory is configured to store necessary program instructions and data that are executed by the processor. The chip may include a chip, or may include a chip and another discrete device.

This application is described with reference to flowcharts and/or block diagrams based on the method, the device (system), and the computer program product in embodiments of this application. It should be understood that each procedure and/or block in the flowchart and/or block diagram, as well as a combination of the procedure and/or block in the flowchart and/or block diagram, may be implemented by computer program instructions. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that generating computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. This application is intended to cover these modifications and variations provided that they fall within the scope of protection defined by the following claims and their equivalent technologies.

## Claims

1. A processing method of an optical transport network frame, wherein the method comprises:

   mapping a first optical service unit frame to the optical transport network frame in a first mapping manner;
   mapping a second optical service unit frame to the optical transport network frame in a second mapping manner, wherein types of the second optical service unit frame and the first optical service unit frame are different, and overhead information corresponding to the second mapping manner is at least partially different from overhead information corresponding to the first mapping manner; and
   sending the optical transport network frame.

2. The processing method according to claim 1, wherein a payload area of the optical transport network frame is divided into P slots, the P slots are arranged in an interleaved manner in a unit of a block, the first optical service unit frame is mapped to M1 slots of the P slots, and the second optical service unit frame is mapped to M2 slots of the P slots.

3. The processing method according to claim 2, wherein a size of the block is X bytes+y bits, the y bits are for carrying the overhead information corresponding to the first mapping manner or the second mapping manner, and the X bytes are for carrying an optical service unit frame or stuff.

4. The processing method according to claim 2, wherein a size of the block is X bytes, one block in the M1 slots or one block in the M2 slots comprises y bits, and the y bits are for carrying the overhead information corresponding to the first mapping manner or the second mapping manner.

5. The processing method according to claim 2, wherein an overhead area of the optical transport network frame comprises y bits, the y bits are for carrying the overhead information corresponding to the first mapping manner or the second mapping manner, a size of the block is X bytes, and the X bytes are for carrying an optical service unit frame and/or stuff.

6. The processing method according to claim 1, wherein the mapping a first optical service unit frame to the optical transport network frame in a first mapping manner, and the mapping a second optical service unit frame to the optical transport network frame in a second mapping manner specifically comprise:

   mapping the first optical service unit frame to a first optical service tributary unit frame in the first mapping manner;
   mapping the second optical service unit frame to a second optical service tributary unit frame in the second mapping manner; and
   multiplexing the first optical service tributary unit frame and the second optical service tributary unit frame into the optical transport network frame.

7. The processing method according to claim 6, wherein a structure of the first optical service tributary unit frame or the second optical service tributary unit frame is p*M blocks, M represents a quantity of slots comprised in the first optical service tributary unit frame or the second optical service tributary unit frame, each of the p*M blocks comprises an overhead area and a payload area, and a size of each of the p*M blocks is X bytes+y bits, wherein the y bits are for carrying mapping overhead information corresponding to the first mapping manner or the second mapping manner, and M is a positive integer greater than or equal to 1.

8. The processing method according to claim 6, wherein a structure of the first optical service tributary unit frame or the second optical service tributary unit frame is p*M blocks, a size of each of the p*M blocks is X bytes, y bits in the p*M blocks are for carrying mapping overhead information corresponding to the first mapping manner or the second mapping manner, and M is a positive integer greater than or equal to 1.

9. The processing method according to claim 6, wherein a structure of the first optical service tributary unit frame or the second optical service tributary unit frame is y bits+p*M blocks, a size of each of the p*M blocks is X bytes, and the y bits are for carrying mapping overhead information corresponding to the first mapping manner or the second mapping manner.

10. The processing method according to claim 9, wherein the y bits are located in an overhead area of the optical transport network frame.

11. The processing method according to any one of claims 2 to 5 and claims 7 to 10, wherein the overhead information corresponding to the first mapping manner comprises first indication information, the first indication information indicates data or stuff carried in a block in which the first indication information is located, the overhead information corresponding to the second mapping manner comprises second indication information, and the second indication information indicates a minimum amount or a maximum amount of service data carried in a block in which the second indication information is located.

12. The processing method according to any one of claims 2 to 5 and claims 7 to 10, wherein both the overhead information corresponding to the first mapping manner and the overhead information corresponding to the second mapping manner comprise first indication information, the first indication information indicates a data amount of carried service data, or indicates data or stuff carried in a block in which the first indication information is located, the overhead information corresponding to the second mapping manner further comprises second indication information, and the second indication information indicates clock information of the carried service data.

13. The processing method according to any one of claims 2 to 5 and claims 7 to 10, wherein the overhead information corresponding to the first mapping manner comprises first indication information, the first indication information indicates data or stuff carried in a block in which the first indication information is located, the overhead information corresponding to the second mapping manner comprises data amount information that indicates carried service data and clock information that indicates the carried service data.

14. The processing method according to any one of claims 1 to 13, wherein a quantity of slots that are occupied by the first optical service unit frame and that are of the optical transport network frame is determined by a bit rate of the first optical service unit frame and a bit rate of the slot.

15. An optical transport network device, wherein the device comprises a processor and a transceiver, the transceiver is configured to send an optical transport network frame, and the processor is configured to perform the method according to any one of claims 1 to 14; and

    the sending an optical transport network frame comprises: receiving, by the transceiver, the optical transport network frame sent by the processor, and sending the optical transport network frame.

16. An optical communication system, wherein the optical communication system comprises client device and the optical transport network device according to claim 15, wherein

    the client device sends first service data and second service data to the optical transport network device; and
    the optical transport network device is further configured to:

        map the first service data to a first optical service unit frame; and
        map the second service data to a second optical service unit frame.

FIG. 1

FIG. 2

FIG. 3

OPU frame

Multiplexing structure

2 bits 16 bytes

15    16    17                                                                              3824

| | | | JC$_1$ | 16B #1 | JC$_2$ | 16B #2 | JC$_3$ | 16B #3 | | ... | JC$_{P-1}$ | 16B #P-1 | JC$_P$ | 16B #P | JC$_1$ | 16B #1 | JC$_2$ | 16B #2 | ... |

OPU overhead area

TS #1        TS #2        TS #3                                    TS #P-1        TS #P        TS #1        TS #2

...

...

...

OPU payload area

...

FIG. 4

Device H      Device G      Device F

S401: Receive two pieces of service data, where service types of the two pieces of service data are different

S403: Respectively map the two pieces of service data to a first optical service unit frame and a second optical service unit frame

S405: Respectively map the first optical service unit frame and the second optical service unit frame to an optical transport network frame in different mapping manners, where overheads corresponding to the different mapping manners are different or partially the same

S407: Send the optical transport network frame

S501: Parse the optical transport frame based on demapping manners corresponding to the different mapping manners, to obtain the first optical service unit frame and the second optical service unit frame

S503: Respectively map the first optical service unit frame and the second optical service unit frame to another optical transport network frame in the different mapping manners

400

S505: Send the another optical transport network frame

S601: Obtain the first optical service unit frame and the second optical service unit frame from the another optical transport network frame in the different demapping manners, and obtain the two pieces of service data from the first optical service unit frame and the second optical service unit frame

FIG. 5

| | Slot #i | | Slot #j | | Slot #k | |
|---|---|---|---|---|---|---|
| | 2b | 16B | 2b | 16B | 2b | 16B |

700

OSTU.M frame including M slots

| | | |
|---|---|---|
| JC | TS #i | JC TS #j | JC TS #k |

FIG. 6a

| | Slot #i | Slot #j | Slot #k |
|---|---|---|---|
| | 16B | 16B | 16B |

800

OSTU.M frame including M slots

| y bit | TS #i | TS #j | TS #k |

FIG. 6b

|  | Slot #i | Slot #j | | Slot #k |
| --- | --- | --- | --- | --- |
|  | 16B | 16B | | 16B |
| y bit | TS #i | TS #j | | TS #k |
|  | TS #i | TS #j | | TS #k |
|  | TS #i | TS #j | ... | TS #k |
|  | TS #i | TS #j | | TS #k |

900

OSTU.M frame including M slots

... ... ... ...

|  | TS #i | TS #j | | TS #k |
| --- | --- | --- | --- | --- |
|  | TS #i | TS #j | | TS #k |
|  | TS #i | TS #j | ... | TS #k |
|  | TS #i | TS #j | | TS #k |

FIG. 6c

S1001: Map a first optical service unit frame to a first service tributary unit frame in a first mapping manner, where the first optical service unit frame is for carrying a first type of service data

S1003: Map a second optical service unit frame to a second service tributary unit frame in a second mapping manner, where the second optical service unit frame is for carrying a second type of service data, and mapping overhead information of the second mapping manner is at least partially different from that of the first mapping manner

S1005: Multiplex and map the first service tributary unit frame and the second tributary unit frame into an optical transport network frame

S1007: Send the optical transport network frame

FIG. 7

FIG. 8

FIG. 9

**M columns**

| | 2b | 16B | | 2b | 16B | | 2b | 16B |

FIG. 10

1100

FIG. 11

## INTERNATIONAL SEARCH REPORT

| | International application No. |
|---|---|
| | **PCT/CN2023/116463** |

**A. CLASSIFICATION OF SUBJECT MATTER**

H04Q11/00(2006.01)i

According to International Patent Classification (IPC) or to both national classification and IPC

**B. FIELDS SEARCHED**

Minimum documentation searched (classification system followed by classification symbols)

IPC:H04Q

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 低速, 速率, 不同, 业务, 映射, 帧, 开销, 光传输网, 光传送网, 光业务单元, OTN, OSU, different, low, rate, service, mapping, frame, overhead, optical transport network, optical service unit

**C. DOCUMENTS CONSIDERED TO BE RELEVANT**

| Category* | Citation of document, with indication, where appropriate, of the relevant passages | Relevant to claim No. |
|---|---|---|
| X | CN 1790993 A (HUAWEI TECHNOLOGIES CO., LTD.) 21 June 2006 (2006-06-21) description, page 6, line 16 to page 24, line 14, and figures 2-5 | 1-16 |
| X | CN 1770673 A (HUAWEI TECHNOLOGIES CO., LTD.) 10 May 2006 (2006-05-10) description, page 2, line 23 to page 15, line 26, and figures 1-10 | 1-16 |
| Y | CN 113395613 A (HUAWEI TECHNOLOGIES CO., LTD.) 14 September 2021 (2021-09-14) descriptions, paragraphs [0005]-[0153], and figures 2-15 | 1-16 |
| Y | CN 114844593 A (HUAWEI TECHNOLOGIES CO., LTD.) 02 August 2022 (2022-08-02) description, paragraphs [0005]-[0164], and figures 1-14 | 1-16 |
| A | CN 112042138 A (HUAWEI TECHNOLOGIES CO., LTD.) 04 December 2020 (2020-12-04) entire document | 1-16 |
| A | CN 101695144 A (ZTE CORP.) 14 April 2010 (2010-04-14) entire document | 1-16 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **21 November 2023** | **23 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/116463**

### C. DOCUMENTS CONSIDERED TO BE RELEVANT

| Category* | Citation of document, with indication, where appropriate, of the relevant passages | Relevant to claim No. |
|---|---|---|
| A | US 2015381513 A1 (ELECTRONICS AND TELECOMMUNICATIONS RESEARCH INSTITUTE) 31 December 2015 (2015-12-31)<br>entire document | 1-16 |

Form PCT/ISA/210 (second sheet) (July 2022)

24

## INTERNATIONAL SEARCH REPORT
### Information on patent family members

International application No.

**PCT/CN2023/116463**

| Patent document cited in search report | | | Publication date (day/month/year) | Patent family member(s) | | | Publication date (day/month/year) |
|---|---|---|---|---|---|---|---|
| CN | 1790993 | A | 21 June 2006 | WO | 2006063521 | A1 | 22 June 2006 |
| | | | | ES | 2376470 | T3 | 14 March 2012 |
| | | | | EP | 1826926 | A1 | 29 August 2007 |
| | | | | EP | 1826926 | A4 | 16 July 2008 |
| | | | | EP | 1826926 | B1 | 14 December 2011 |
| | | | | DK | 1826926 | T3 | 27 February 2012 |
| | | | | US | 2007248121 | A1 | 25 October 2007 |
| | | | | US | 7848653 | B2 | 07 December 2010 |
| | | | | AT | 537621 | T | 15 December 2011 |
| | | | | CN | 100373847 | C | 05 March 2008 |
| CN | 1770673 | A | 10 May 2006 | CN | 100590997 | C | 17 February 2010 |
| CN | 113395613 | A | 14 September 2021 | CN | 113395613 | B | 19 August 2022 |
| | | | | WO | 2021180007 | A1 | 16 September 2021 |
| | | | | EP | 4099712 | A1 | 07 December 2022 |
| | | | | EP | 4099712 | A4 | 19 July 2023 |
| CN | 114844593 | A | 02 August 2022 | WO | 2019153253 | A1 | 15 August 2019 |
| | | | | CN | 111713117 | A | 25 September 2020 |
| | | | | EP | 3737110 | A1 | 11 November 2020 |
| | | | | US | 2020366412 | A1 | 19 November 2020 |
| | | | | EP | 3737110 | A4 | 13 January 2021 |
| | | | | CN | 111713117 | B | 12 April 2022 |
| | | | | US | 11700083 | B2 | 11 July 2023 |
| CN | 112042138 | A | 04 December 2020 | WO | 2019213901 | A1 | 14 November 2019 |
| | | | | BR | 112020022732 | A2 | 02 February 2021 |
| | | | | EP | 3783820 | A1 | 24 February 2021 |
| | | | | US | 2021058156 | A1 | 25 February 2021 |
| | | | | EP | 3783820 | A4 | 28 April 2021 |
| | | | | RU | 2759514 | C1 | 15 November 2021 |
| | | | | US | 11233571 | B2 | 25 January 2022 |
| | | | | CN | 112042138 | B | 01 February 2022 |
| | | | | CN | 114513710 | A | 17 May 2022 |
| | | | | US | 2022150179 | A1 | 12 May 2022 |
| CN | 101695144 | A | 14 April 2010 | WO | 2010145404 | A1 | 23 December 2010 |
| | | | | CN | 101695144 | B | 12 August 2015 |
| US | 2015381513 | A1 | 31 December 2015 | US | 9743162 | B2 | 22 August 2017 |
| | | | | KR | 20160001496 | A | 06 January 2016 |
| | | | | KR | 101819269 | B1 | 28 February 2018 |

Form PCT/ISA/210 (patent family annex) (July 2022)